# FASCICULE DE BREVET EUROPEEN

(11) **EP 3 978 823 B1**
(45) Date de publication et mention de la délivrance du brevet: **11.09.2024**
(21) Numéro de dépôt: 21197165.0
(22) Date de dépôt: 16.09.2021
(51) Int. Cl.: F24H 3/02, F23D 14/38, F24H 3/04, F23D 14/46

(54) **APPAREIL PORTABLE GENERATEUR D'AIR CHAUD COMPRENANT UN SYSTEME D'AMORTISSEMENT**
TRAGBARER HEISSLUFTERZEUGER MIT DÄMPFUNGSSYSTEM
PORTABLE HOT AIR GENERATOR DEVICE INCLUDING A DAMPING SYSTEM.

(30) Priorité: 30.09.2020 FR 2009978
(43) Date de publication de la demande: 06.04.2022
(73) Titulaire: SEFMAT, 33185 Le Haillan (FR)
(72) Inventeur: CLEMENT, François, 33185 Le Haillan (FR)
(74) Mandataire: LLR

(56) Documents cités:
- EP-A2- 0 841 518
- EP-A2- 1 795 803
- DE-A1- 2 822 192

## Description

La présente invention concerne un appareil brûleur/générateur d'air chaud, ci-après nommé appareil, utilisable, notamment mais non exclusivement, au chauffage à basse température de film de matière plastique, par exemple de film de polyéthylène en vue de leur rétraction au moyen d'un flux gazeux provenant de la combustion d'un gaz combustible tel que du propane et de l'air ou pour la pose de matériau thermoplastique au sol. Ces appareils sont généralement connus sous le nom de pistolet de rétraction.

Un pistolet de rétraction est composé essentiellement d'une alimentation commandée par une gâchette pour alimenter un Venturi, à partir d'une source externe de gaz, par exemple du GPL, sous une pression supérieure à la pression atmosphérique. Un mélange inflammable « gaz-air atmosphérique » se forme dans le Venturi et débouche dans une chambre de combustion, où il est brûlé. L'allumage du mélange gazeux ainsi formé est réalisé aux bornes d'une bougie par une étincelle dont l'énergie électrique est produite par un allumeur piézoélectrique situé à l'intérieur du pistolet et actionné lors de l'enfoncement de la gâchette.

Les documents EP0841518A2, DE2822192A1 et EP1795803A2, décrivent tous trois de tels pistolets.

Le Venturi et la chambre de combustion forment ensemble un corps sensiblement en forme de tube. L'amont du tube forme une prise d'air pour le Venturi. L'aval forme un diffuseur pour les gaz chauds produits par l'appareil.

Les différentes fonctions remplies par ce tube imposent des changements de section et de forme qui le rendent complexe à réaliser. Ainsi, le tube est généralement formé en deux parties ; une première partie forme le Venturi, la deuxième partie forme le diffuseur et sert de chambre de combustion. Le diffuseur est rapporté et assemblé sur le Venturi, par emboîtement ou vissage. Cette disposition demande de nombreuses manipulations lors de la fabrication de l'appareil et le rend fragile lors de son utilisation.

Ainsi, un premier but de l'invention est de proposer un corps plus robuste et plus simple à fabriquer.

En outre, un pistolet de rétractation, comme tous les appareils à main, sont fortement sollicités et subissent régulièrement des chutes au sol.

Ainsi, un deuxième but de l'invention est de proposer un appareil dont la résistance aux chocs, notamment en cas de chute, est améliorée.

Selon l'invention, un appareil portable générateur d'air chaud comprend une poignée et un corps qui s'étend selon un axe principal horizontal, l'appareil étant sensiblement symétrique relativement à un plan longitudinal vertical et l'appareil comprenant, en outre, un système d'amortissement entre la poignée et le corps, de sorte que la poignée n'a pas de contact direct avec le corps.

Le système peut comprendre au moins un amortisseur, de préférence deux amortisseurs, chaque amortisseur comprenant un logement, un taquet et une matière amortisseuse, le logement étant formé dans la poignée, le taquet étant solidaire du corps, et, la matière formant une prise élastique pour une extrémité du taquet dans le logement, à distance des parois de ce logement. Le taquet comprend avantageusement une tige qui s'étend verticalement vers le bas depuis le corps et une barre transversale à une extrémité distale de la tige, le logement comprenant une ouverture pour le passage avec jeu de la tige. De préférence, la poignée comprend deux coques sensiblement symétriques l'une de l'autre relativement au plan de symétrie, chacune des coques formant une partie du logement ouverte latéralement.

La poignée peut comprendre deux coques sensiblement symétriques l'une de l'autre relativement au plan de symétrie, chacune de ces coques comprenant des nervures, perpendiculaires au plan de symétrie, le système d'amortissement comprenant une couche de matière amortisseuse disposée sur une crête des nervures, entre le corps et la coque.

Des modes de réalisation et des variantes seront décrits ci-après, à titre d'exemples non limitatifs, avec référence aux dessins annexés dans lesquels :
[Fig. 1] est une vue d'un appareil générateur d'air chaud, dans un premier mode de réalisation de l'invention, en coupe schématique en élévation longitudinale, selon un plan de coupe I-I de la figure 2 ;
[Fig. 2] est une vue en coupe schématique transversale de l'appareil de la figure 1, selon un plan de coupe II-II de la figure 1 ;
[Fig. 3] est une vue schématique en élévation longitudinale d'un appareil générateur d'air chaud, dans un deuxième mode de réalisation de l'invention où, notamment, le corps est réalisé en deux flans sensiblement symétriques entre eux ;
[Fig. 4] est une vue en perspective d'un flan pour former un corps de l'appareil de la figure 3 ;
[Fig. 5] est une vue en perspective de la poignée de l'appareil de la figure 3 ; et,
[Fig. 6] est une vue en coupe transversale schématique de l'appareil des figures 3 à 4.

Les figures illustrent un appareil générateur d'air chaud 1, dans deux modes de réalisation différents. Un tel appareil est portable, c'est-à-dire qu'il peut être tenu à la main, comme un pistolet dont il a sensiblement la forme. Il est utilisable, mais non exclusivement, au chauffage à basse température de films de matière plastique, par exemple de film en polyéthylène, en vue de leur rétractation au moyen d'un flux d'air chaud provenant de la combustion d'un gaz carburant tel que le propane et l'air, ou pour la pose d'un matériau thermoplastique au sol. Il peut aussi être utilisé pour du désherbage thermique ; notamment dans ce dernier cas, il peut être équipé d'un prolongateur.

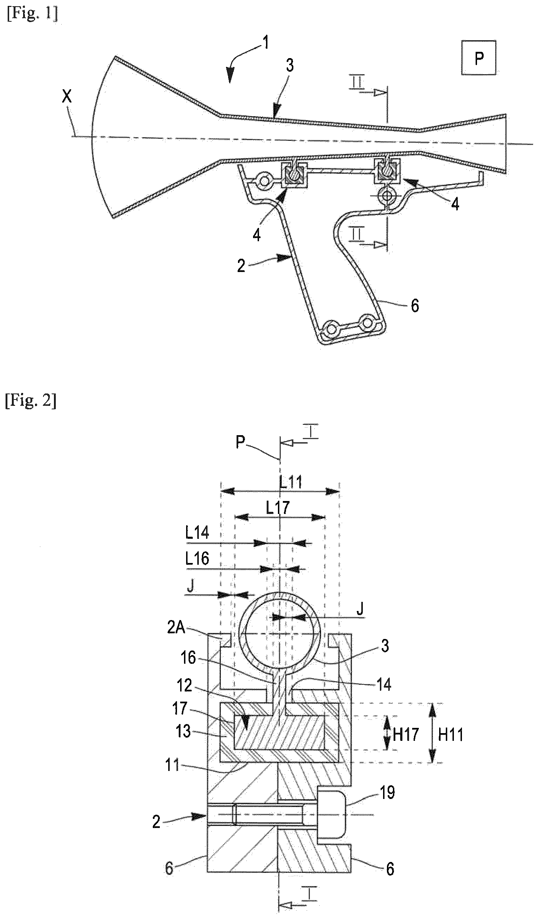

Un premier mode de réalisation d'un tel appareil 1 est illustré aux figures 1 et 2. Un tel appareil est généralement sensiblement symétrique relativement à un plan P et comporte un axe principal X. Dans la description, notamment les termes haut, bas, avant, arrière permettent de décrire l'appareil en le considérant dans une position telle que le plan P est vertical et l'axe principal X est horizontal, l'air chaud produit par l'appareil étant expulsé vers l'avant de l'appareil.

A la figure 1, l'appareil 1 est représenté en élévation et en coupe longitudinale selon le plan de symétrie P.

L'appareil 1 comprend principalement une poignée 2 et un corps 3. Le corps et la poignée sont sensiblement rigides. Le corps a sensiblement la forme d'un tube de révolution autour de l'axe principal X, prolongé par une partie aplatie servant de diffuseur. L'appareil comprend en outre un système d'amortissement comprenant deux amortisseurs 4.

Chaque amortisseur comprend un logement 11, un taquet 12 et une matière amortisseuse 13.

Le logement 11 est formé dans la poignée 2. Le logement 11 comprend une ouverture 14, vers le haut. Le taquet 12 est solidaire du corps 3 et s'étend vers le bas depuis ce corps, au travers de l'ouverture 14, jusque dans le logement 11, sans contact avec les coques 6. La matière amortisseuse 13 isole le taquet des parois du logement 11, et maintient le taquet dans le logement.

Dans l'exemple illustré, le taquet a une forme de « T » inversé dont la tige 16 s'étend depuis le corps 3 au travers de l'ouverture 14, et une barre transversale 17 est noyée dans la matière amortisseuse 13. Comme illustré à la figure 2, en coupe transversale, le logement 11 a une largeur L11 et une hauteur H11 respectivement supérieures à la largeur L17 et à la hauteur H17 de la barre 17, de sorte que la barre 17 est suffisamment entourée de matière 13, sans contact avec la poignée 2. En outre, l'ouverture 14 a une largeur L14 supérieure à la largeur L16 de la tige 16, de façon à garantir un jeu J suffisant, entre les parois de l'ouverture 14 et la tige 16. Comme illustré à la figure 1, il en va de même pour les dimensions longitudinales. Aussi, un jeu J suffisant est maintenu entre le corps 3 et d'autres parties 2A de la poignée 2. De plus, la largeur L17 de la barre 17 est supérieure à la largeur L14 de l'ouverture 14, de sorte que l'amortisseur assure une fixation positive du corps sur la poignée, c'est-à-dire sans risque que le corps ne se détache de la poignée, même en cas de dégradation de la matière 13. De préférence, la matière 13 est un élastomère.

Dans l'exemple illustré, la poignée 2 est formée de deux coques 6 sensiblement symétriques entre elles relativement au plan de symétrie P. Elles sont fixées l'une à l'autre par un système de vis 19. Le logement 11 est formé par l'assemblage des deux coques, de sorte qu'avant cet assemblage le logement est en deux parties ouvertes latéralement. Ainsi, la barre 17 du taquet 12 peut être introduite dans l'une des parties, avant assemblage des coques 6. Après assemblage des coques, la barre 17 se trouve prisonnière du logement, assurant ainsi la fixation positive du corps sur la poignée.

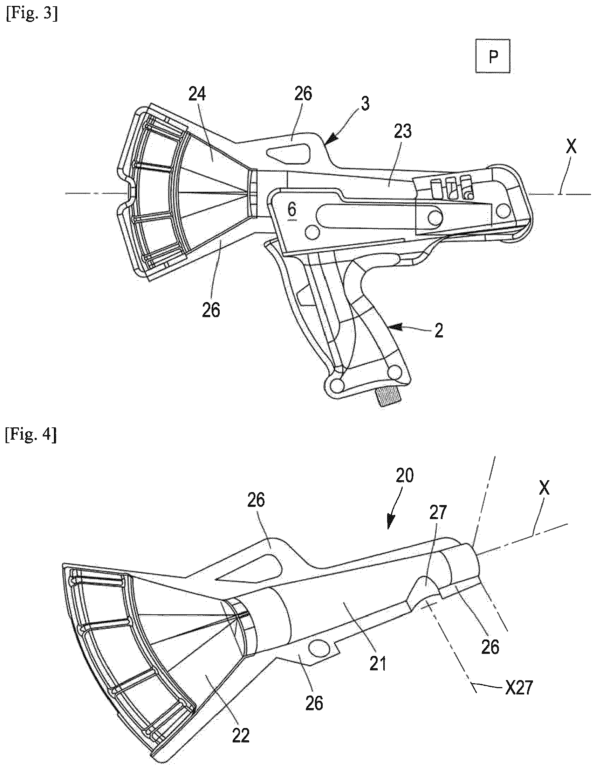

Les figures 3 à 6 illustrent un deuxième mode de réalisation pour un appareil générateur d'air chaud 1 selon l'invention. Ce deuxième mode de réalisation sera décrit en ce qu'il diffère du premier mode de réalisation, précédemment décrit.

Dans cet exemple, comme particulièrement illustré aux figures 3, 4 et 5, le corps 3 est principalement formé de deux flans 20 symétriques l'un de l'autre relativement au plan de symétrie P. Chaque flan est formé d'une seule pièce en tôle emboutie. Il comprend une première partie 21 de section semi circulaire, de révolution autour de l'axe longitudinal X ; elle forme une paroi du Venturi 23. Une deuxième partie 22 prolonge la première vers l'avant, en s'écrasant et en s'évasant, d'arrière en avant ; elle forme une paroi du diffuseur 24.

Chaque flan 20 comprend, en haut et en bas, là où les flans se rejoignent sur le plan de symétrie P, des bords plats 26 parallèles au plan P. Lorsque les flans sont maintenus plaqués l'un contre l'autre, les bords 26, suffisamment larges, forment entre eux un joint sec garantissant une étanchéité suffisante autour du flux gazeux qui traverse longitudinalement le corps 3.

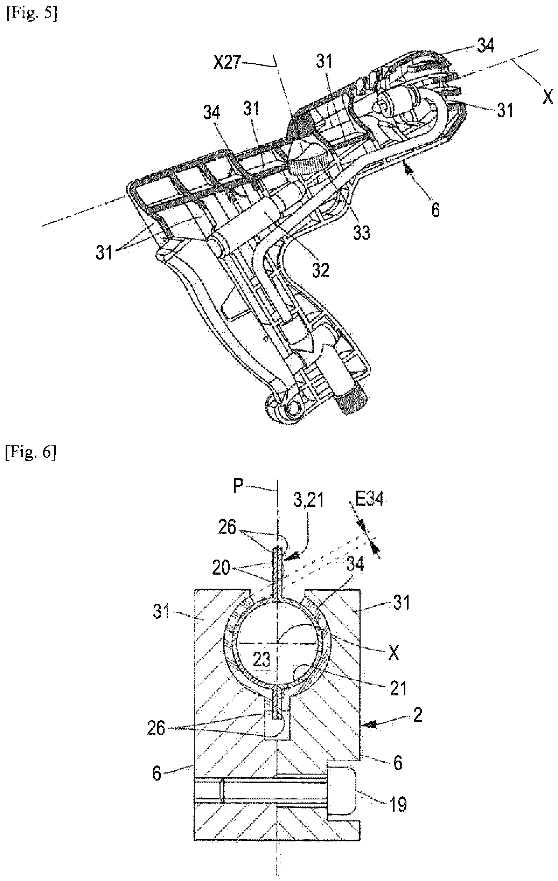

En partie basse, entre les bords plats, chaque flan forme une voute 27, de révolution autour d'un axe secondaire X27, sensiblement vertical et perpendiculaire à l'axe principal X. Un bouchon 33, illustré à la figure 5, est prévu pour être disposé entre les voûtes pour y faire passer, avec étanchéité, un fil alimentant électriquement une bougie d'allumage depuis un allumeur piézoélectrique 32 ; la bougie et le fil ne sont pas représentés aux figures.

Comme particulièrement illustré aux figures 5 et 6, ainsi que dans le premier mode de réalisation, la poignée 2 comprend deux coques 6 assemblées entre elles par un système de vis 19. Dans le deuxième mode de réalisation, chaque coque 6 comprend un cadrillage de nervures 31, sensiblement perpendiculaires au plan de symétrie P. Ces nervures ont pour fonctions premières de former les parois transversales de chaque coque 6 et d'en assurer une rigidité suffisante.

De même que dans le premier mode de réalisation, l'appareil 1 comprend un système d'amortissement entre le corps 3 et la poignée 2. Ce système comprend une couche 34 de matière amortisseuse collée sur la crête des nervures 31, dans la partie supérieure de chaque coque. La couche 34 a une épaisseur E34, mesurée dans un plan transversal, sensiblement constante. De préférence la couche 34 est en élastomère.

Comme illustré à la figure 6, la couche 34 assure une interface élastique entre la poignée 2 et le corps 3, à la fois sur la partie tubulaire 23,24 et sur les bords plats, sans que le corps ne soit en contact avec aucune des coques 6. Une pression exercée par la couche 34 sur les bords plats 26 permet d'assurer entre les bords plats 26 une étanchéité suffisante, même à joint sec.

Par ailleurs, les coques se replient partiellement au-dessus de la première partie 21 du corps 3, de sorte qu'après assemblage des coques entre elles, elles assurent une fixation positive du corps sur la poignée.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, au lieu d'un joint sec, les flans peuvent être assemblés par soudage ou par collage.

Aussi, le corps peut être réalisé d'une seule pièce, par exemple par moulage.

Le nombre d'amortisseurs peut varier en fonction de la forme du diffuseur.

Aussi, chaque "taquets" peut être un pli de la tôle du corps ; ce pli peut formant une patte, qui vient en prise dans la matière amortisseuse. Un amortisseur peut aussi, par exemple, prendre la forme d'une bague qui entoure le corps, de sorte qu'il n'y a pas besoin de taquet pour l'y maintenir.

Un générateur selon l'invention présente de nombreux avantages par rapport à un générateur de l'art antérieur ; notamment :
- il a un coût de fabrication notablement réduit ; et,
- il a une résistance améliorée. En désolidarisant la poignée du corps, il évite que la poignée casse, notamment lors d'une chute sur le corps, dont l'impact se transmettrait directement à une poignée en plastique.

## Revendications

1. Appareil portable générateur d'air chaud (1) comprenant une poignée (2) et un corps (3) qui s'étend selon un axe principal horizontal (X), l'appareil étant sensiblement symétrique relativement à un plan longitudinal vertical (P), **caractérisé en ce qu'**il comprend en outre un système d'amortissement (4, 34) entre ladite poignée et ledit corps, de sorte que la poignée n'a pas de contact direct avec le corps.

2. Appareil selon la revendication 1, **caractérisé en ce que** le système d'amortissement comprend au moins un amortisseur (4), chaque amortisseur comprenant un logement (11), un taquet (12) et une matière amortisseuse (13), ledit logement étant formé dans la poignée, ledit taquet étant solidaire du corps, et, ladite matière formant une prise élastique pour une extrémité du taquet dans le logement, à distance des parois dudit logement.

3. Appareil selon la revendication 2, **caractérisé en ce que** le taquet (12) comprend une tige (16) qui s'étend verticalement vers le bas depuis le corps (3) et une barre transversale (17) à une extrémité distale de ladite tige, et **en ce que** le logement comprend une ouverture (14) pour le passage avec jeu (J) de la tige.

4. Appareil selon la revendication 2, **caractérisé en ce que** le taquet est un pli de la tôle du corps qui forme une patte venant en prise dans la matière amortisseuse.

5. Appareil selon l'une des revendications 2 à 4, **caractérisé en ce que** la poignée comprend deux coques (6) sensiblement symétriques l'une de l'autre relativement au plan de symétrie (P), chacune desdites coques formant une partie du logement ouverte latéralement.

6. Appareil selon l'une des revendications 2 à 5, **caractérisé en ce qu'**il comprend deux amortisseurs.

7. Appareil selon la revendication 1, **caractérisé en ce que** le système d'amortissement comprend au moins un amortisseur ayant la forme d'une bague qui entoure le corps.

8. Appareil selon la revendication 1, **caractérisé en ce que** la poignée (2) comprend deux coques (6) sensiblement symétriques l'une de l'autre relativement au plan de symétrie (P), chacune desdites coques comprenant des nervures (31), perpendiculaires audit plan de symétrie (P), le système d'amortissement comprenant une couche (34) de matière amortisseuse disposée sur une crête desdites nervures, entre le corps et ladite coque.

9. Appareil selon la revendication 1, **caractérisé en ce que** le corps est principalement formé de deux flans (20) sensiblement symétriques entre eux relativement au plan de symétrie (P), chaque flan étant formé d'une seule pièce en tôle emboutie et comprenant une première partie (21) de section semi circulaire, de révolution autour de l'axe longitudinal X, qui forme une paroi d'un Venturi (23) et une deuxième partie (22) prolongeant ladite première partie vers l'avant qui forme un diffuseur (24).

10. Appareil selon la revendication 9, **caractérisé en ce que** chaque flan comprend en haut et en bas, là où les flans (20) se rejoignent sur le plan de symétrie (P), des bords plats (26) parallèles au plan (P).

11. Appareil selon la revendication 10, **caractérisé en ce que** les flans sont assemblés à joint sec.

## Patentansprüche

1. Heißlufterzeugendes tragbares Gerät (1), umfassend einen Griff (2) und einen Körper (3), der sich entlang einer horizontalen Hauptachse (X) erstreckt, wobei das Gerät relativ zu einer vertikalen Längsebene (P) im Wesentlichen symmetrisch ist, **dadurch gekennzeichnet, dass** es ferner ein Dämpfungssystem (4, 34) zwischen dem Griff und dem Körper umfasst, so dass der Griff mit dem Körper nicht in direktem Kontakt ist.

2. Gerät nach Anspruch 1, **dadurch gekennzeichnet, dass** das Dämpfungssystem wenigstens einen Dämpfer (4) umfasst, wobei jeder Dämpfer einen Sitz (11), eine Lasche (12) und ein dämpfendes Material (13) umfasst, wobei die Aufnahme in dem Griff gebildet ist, wobei die Lasche mit dem Körper fest verbunden ist und wobei das Material eine elastische Aufnahme für ein Ende (4-2) der Lasche in dem Sitz, beabstandet von den Wänden des Sitzes, bildet.

3. Gerät nach Anspruch 2, **dadurch gekennzeichnet, dass** die Lasche (12) einen Schaft (16), der sich von dem Körper (3) aus vertikal nach unten erstreckt, und einen Querstab (17) an einem distalen Ende des Schafts umfasst und dass der Sitz eine Öffnung (14) für den Durchtritt des Schafts mit Spiel (J) umfasst.

4. Gerät nach Anspruch 2, **dadurch gekennzeichnet, dass** die Lasche ein Falz des Blechs des Körpers ist, der einen Lappen bildet, der in dem dämpfenden Material in Eingriff kommt.

5. Gerät nach einem der Ansprüche 2 bis 4, **dadurch gekennzeichnet, dass** der Griff zwei Schalen (6) umfasst, die relativ zu der Symmetrieebene (P) zueinander im Wesentlichen symmetrisch sind, wobei jede der Schalen einen Teil des Sitzes bildet, der seitlich offen ist.

6. Gerät nach einem der Ansprüche 2 bis 5, **dadurch gekennzeichnet, dass** es zwei Dämpfer umfasst.

7. Gerät nach Anspruch 1, **dadurch gekennzeichnet, dass** das Dämpfungssystem wenigstens einen Dämpfer umfasst, der die Form eines den Körper umgebenden Ringes aufweist.

8. Gerät nach Anspruch 1, **dadurch gekennzeichnet, dass** der Griff (2) zwei Schalen (6) umfasst, die relativ zu der Symmetrieebene (P) zueinander im Wesentlichen symmetrisch sind, wobei jede der Schalen Rippen (31) umfasst, die zu der Symmetrieebene (P) senkrecht sind, wobei das Dämpfungssystem eine Schicht (34) aus dämpfendem Material umfasst, die auf einem Scheitel der Rippen, zwischen dem Körper und der Schale, angeordnet ist.

9. Gerät nach Anspruch 1, **dadurch gekennzeichnet, dass** der Körper im Wesentlichen von zwei Blechplatten (20) gebildet ist, die relativ zu der Symmetrieebene (P) zueinander im Wesentlichen symmetrisch sind, wobei jede Blechplatte von einem einzigen Teil aus gestanztem Blech gebildet ist und einen ersten Teil (21) mit halbkreisförmigem Querschnitt, mit Rotationsform um die Längsachse X, der eine Wand eines Venturi (23) bildet, und einen zweiten Teil (22), der den ersten Teil nach vorne verlängert und einen Diffusor (24) bildet, umfasst.

10. Gerät nach Anspruch 9, **dadurch gekennzeichnet, dass** jede Blechplatte oben und unten, wo die Blechplatten (20) auf der Symmetrieebene (P) zusammentreffen, flache Ränder (26) umfasst, die zu der Ebene (P) parallel sind.

11. Gerät nach Anspruch 10, **dadurch gekennzeichnet, dass** die Blechplatten mit Trockenfuge zusammengefügt sind.

## Claims

1. A portable hot air generator apparatus (1) comprising a handle (2) and a body (3) which extends along a horizontal main axis (X) the apparatus being substantially symmetrical relative to a vertical longitudinal plane (P), **characterized in that** it further comprises a system for damping between said handle and said body, so that the handle does not have direct contact with the body.

2. An apparatus according to claim 1, wherein the damping system comprises at least one damper (4), each damper comprising a housing (11), a cleat (12) and a damping material (13), said housing being formed in the handle, said cleat being integral with the body, and said damping material forming an elastic grip for one end of the cleat in the housing, at a distance from the walls of said housing.

3. An apparatus according to claim 2, wherein the cleat (12) comprises a shank (16) which extends vertically downwards from the body (3) and a crossbar (17) at a distal end from said shank, and wherein the housing comprises an opening (14) for the passage of the shank with clearance (J).

4. An apparatus according to claim 2, wherein the cleat is a fold in the sheet of the body which forms a tab engaging in the damping material.

5. An apparatus according to one of the claims 2 to 4, wherein the handle comprises two shells (6) substantially symmetrical to each other relative to the plane of symmetry (P), each of said shells forming a part of the housing which is open laterally.

6. An apparatus according to one of the claims 2 to 5, comprising two dampers.

7. An apparatus according to claim 1, wherein the damping system comprises at least one damper in the shape of a ring that surrounds the body.

8. An apparatus according to claim 1, wherein the handle (2) comprises two shells (6) substantially symmetrical to each other relative to the plane of symmetry (P), each of said shells comprising ribs (31), perpendicular to said plane of symmetry (P), the damping system comprising a layer (34) of damping material disposed on a ridge of said ribs, between the body and said shell.

9. An apparatus according to claim 1, wherein the body is mainly formed of two blanks (20) substantially symmetrical to each other relative to the plane of symmetry (P), each blank being formed from a single piece of stamped sheet metal and comprising a first part (21) of semi-circular section, of revolution about the longitudinal axis (X), which forms a wall of a Venturi (23) and a second part (22) extending said first part forward which forms a diffuser (24).

10. An apparatus according to claim 9, wherein each blank comprises at the top and at the bottom, where the blanks (20) meet on the plane of symmetry (P), flat edges (26) parallel to the plane (P).

11. An apparatus according to claim 10, wherein the blanks are assembled with a dry seal.
